# EUROPEAN PATENT SPECIFICATION

(11) **EP 2 873 318 B1**
(45) Date of publication and mention of the grant of the patent: **14.09.2016**
(21) Application number: 14193120.4
(22) Date of filing: 13.11.2014
(51) Int. Cl.: A01K 15/02

(54) **Pet exercise wheel**
Haustierübungsrad
Roue d'exercice pour animaux de compagnie

(30) Priority: 14.11.2013 NL 2011804
(43) Date of publication of application: 20.05.2015
(73) Proprietor: FRC Holding B.V., 5154 AD Elshout (NL)
(72) Inventor: Cliteur, Frans, 5154 AD Elshout (NL)
(74) Representative: Verhees, Godefridus Josephus Maria

(56) References cited:
- DE-U1-202013 000 968
- US-A1- 2011 162 586

## Description

The invention relates to a pet exercise wheel comprising an axle and a running wheel having a through bore for mounting the wheel on said axle, wherein the axle is mounted or mountable on a connecting piece which is arranged for placement on a supporting frame. See e.g. US 2011/162586 A1.

Such a pet exercise wheel is known from day to day practice and can for instance be found in numerous offerings on the Internet. Reference can for instance be made to the Super Pet Chinchilla 12" Giant Silent Spinner Exercise Wheel as available on *www.ebay.com > Pet Supplies > Small Animal Supplies.*

Practice learns that the prior art pet exercise wheels are noisy, even when they are offered as being silent. It is therefore an object of the invention to provide a pet exercise wheel which is really comfortable to the ear.

A further object of the invention is to provide a pet exercise wheel which is easy to manufacture at low costs, and/or which provides a suitable alternative for existing pet exercise wheels.

In a first aspect the pet exercise wheel of the invention is characterized in that the axle has a diameter which is larger at its extremities than in a middle portion of the axle between said extremities, wherein said diameter at the extremities of the axle is selected at a value to provide a snug fit in the through bore of the wheel. Although pet exercise wheels as such exist already for many years, it is now found that with this surprisingly simple feature the ever existing noise problem of exercise wheels can be considered a thing of the past.

Preferably the wheel is embodied as a drum providing room for a running animal.

It is also preferable that the axle is releasably connectable to the connecting piece. This supports the ease of handling when mounting the pet exercise wheel to the cage of the pet. This is particularly promoted when the axle is releasably connectable to the connecting piece by rotating it along its longitudinal axis.

The connection between the axle and the connecting piece benefits by providing the axle with a disk shaped protrusion adjacent to one of its extremities and an extension provided on a side of said disk shaped protrusion opposite to where said axle is located, which extension is embodied so as to cooperate with the connecting piece for releasably connecting the axle to the connecting piece.

A preferred embodiment of the extension has wings protruding transverse to the longitudinal axis of the extension leaving a free space between said wings and the said disk shaped protrusion which free space is dimensioned to snugly receive therein a portion or portions of the connecting piece.

Further it is preferable that the connecting piece is provided with a slit that is dimensioned to receive the extension of the axle or a part that is connected to said extension of the axle.

The invention will hereinafter be further elucidated with reference to a drawing of the elements of the pet exercise wheel of the invention shown in an exploded view.

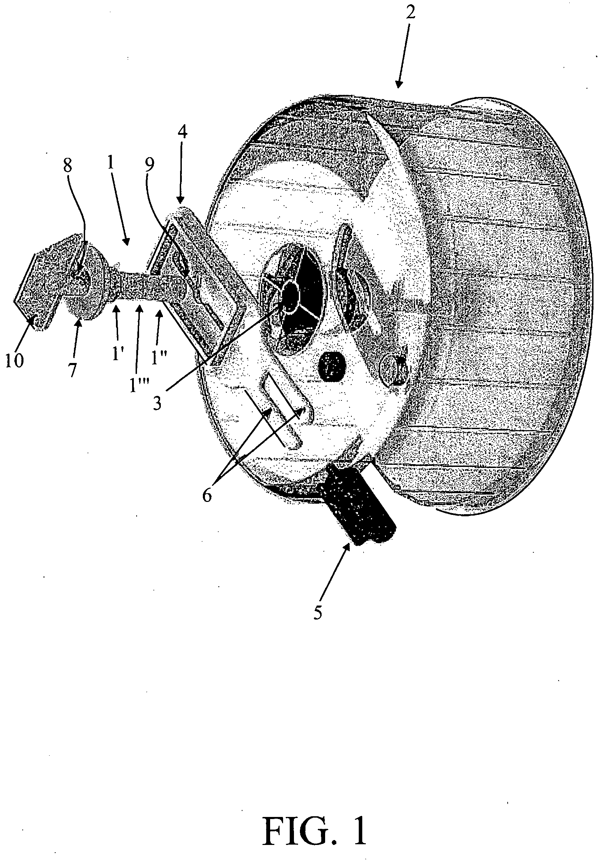

In the drawing a single figure is shown exhibiting that the pet exercise wheel of the invention comprises an axle 1 and a running wheel 2 having a through bore 3 in its center for mounting the wheel 2 on said axle 1. Further the axle 1 is mountable on a connecting piece 4 which is arranged for placement on a (not shown) supporting frame of for instance a cage of the pet. For this purpose an auxiliary mounting piece 5 can be applied which can be placed between the legs 6 of the connecting piece 4.

The axle 1 has a diameter which is larger at its extremities 1', 1" than in a middle portion 1"' of the axle 1 between said extremities 1', 1", wherein said diameter at the extremities 1', 1" of the axle 1 is selected at a value to provide a snug fit in the through bore 3 of the wheel 2. The figure shows the preferable embodiment that the wheel 2 is a drum providing room for a running animal.

The figure further shows that the axle 1 when it is disconnected from the connecting piece 4 to signify that the axle 1 is releasably connectable to the connecting piece 4.

It is preferred that the axle 1 has a disk shaped protrusion 7 adjacent to one 1' of its extremities 1', 1" which operates as a stop relative to the connecting piece 4. For the purpose of making the connection between the axis 1 and the connecting piece 4 possible, the connecting piece 4 is provided with a slit 9 that is dimensioned to receive an extension 8 of the axle 1. The extension 8 is provided on a side of the disk shaped protrusion 7 opposite to where the axle 1 is located, which extension 8 is embodied so as to cooperate with the connecting piece 4 for releasably connecting the axle 1 to the connecting piece 4. For this purpose the extension 8 preferably has wings 10 protruding transverse to the longitudinal axis of the extension 8 leaving a free space between said wings 10 and the said disk shaped protrusion 7, which free space is dimensioned to snugly receive therein a portion or portions of the connecting piece 4.

Connecting the axle 1 to the connecting piece 4 can in this preferred embodiment simply be done by rotating the axle 1 along its longitudinal axis, after the wings 10 and the extension 8 of the axle 1 are first moved through the slit 9 until the disk shaped protrusion 7 acts as stop against the connecting piece 4. Further movement of the axle 1 relative to the connecting piece 4 in one direction is then prevented by the disk shaped protrusion 7, whereas movement in the opposite direction is prevented by said rotation of the axle 1 around its longitudinal axis, causing that the wings 10 are then placed transversely to the slit 9 in the connecting piece 4.

It is pointed out that the invention is not restricted to the specific embodiment that is provided above with the sole purpose of elucidating the appended claims, and without intent to restrict these claims to the specific embodiment discussed herein. The scope of protection of the invention is therefore defined by the appended claims without being deemed restricted to the preferred embodiment discussed herein.

## Claims

1. Pet exercise wheel comprising an axle (1) and a running wheel (2) having a through bore (3) for mounting the wheel (2) on said axle (1), wherein the axle (1) is mounted or mountable on a connecting piece (4) which is arranged for placement on a supporting frame, **characterized in that** the axle (1) has a diameter which is larger at its extremities (1', 1") than in a middle portion (1"') of the axle (1) between said extremities (1', 1"), wherein said diameter at the extremities (1', 1") of the axle (1) is selected at a value to provide a snug fit in the through bore (3) of the wheel (2).

2. Pet exercise wheel according to claim 1, **characterized in that** the wheel (2) is embodied as a drum providing room for a running animal.

3. Pet exercise wheel according to claim 1 or 2, charaterized in that the axle (1) is releasably connectable to the connecting piece (4).

4. Pet exercise wheel according to any one of claims 1-3, **characterized in that** the axle (1) is releasably connectable to the connecting piece (4) by rotating it along its longitudinal axis.

5. Pet exercise wheel according to claim 3 or 4, **characterized in that** the axle (1) has a disk shaped protrusion (7) adjacent to one (1') of its extremities (1', 1") and an extension (8) provided on a side of said disk shaped protrusion (7) opposite to where said axle (1) is located, which extension (8) is embodied so as to cooperate with the connecting piece (4) for releasably connecting the axle (1) to the connecting piece (4).

6. Pet exercise wheel will according to claim 5, **characterized in that** the extension (8) has wings (10) protruding transverse to the longitudinal axis of the extension (8) leaving a free space between said wings (10) and the said disk shaped protrusion (7) which free space is dimensioned to snugly receive therein a portion or portions of the connecting piece (4).

7. Pet exercise wheel according to any one of the previous claims 1-6, **characterized in that** the connecting piece (4) is provided with a slit (9) that is dimensioned to receive the extension (8) of the axle (1) or a part that is connected to said extension (8) of the axle (1).

## Patentansprüche

1. Haustier-Laufrad, das eine Achse (1) und ein drehbares Rad (2) mit einer durchgehenden Öffnung (3) für die Montage des Rades (2) an der erwähnten Achse (1) umfasst, wobei die Achse (1) an einem Verbindungsstück (4) montiert ist oder werden kann, das für die Anbringung an einem Stützrahmen eingerichtet ist, **dadurch gekennzeichnet, dass** die Achse (1) hohl ist und einen Außendurchmesser aufweist, der an den Spitzen (1', 1") größer als in einem Mittelteil (1"') der Achse (1) zwischen den erwähnten Spitzen (1', 1") ist, wobei der Wert des erwähnten Durchmessers an den Spitzen (1', 1") der Achse (1) so gewählt ist, dass eine exakte Passung in der durchgehenden Öffnung (3) des Rades (2) gegeben ist.

2. Haustier-Laufrad nach Anspruch 1, **dadurch gekennzeichnet, dass** das Rad (2) als Trommel ausgeführt ist, die einem laufenden Tier Platz bietet.

3. Haustier-Laufrad nach einem der Ansprüche 1 oder 2, **dadurch gekennzeichnet, dass** die Achse (1) trennbar mit dem Verbindungsstück (4) verbunden werden kann.

4. Haustier-Laufrad nach einem der Ansprüche 1 bis 3, **dadurch gekennzeichnet, dass** die Achse (1) durch Drehung um ihre Längsachse trennbar mit dem Verbindungsstück (4) verbunden werden kann.

5. Haustier-Laufrad nach einem der Ansprüche 3 oder 4, **dadurch gekennzeichnet, dass** die Achse (1) neben einer (1') ihrer Spitzen (1', 1") eine scheibenförmige Ausstülpung (7) sowie eine Verlängerung (8) auf einer Seite des erwähnten scheibenförmigen Vorsprungs (7) besitzt, die der erwähnten Achse (1) gegenüber liegt, wobei die Verlängerung (8) so ausgeführt ist, dass diese mit dem Verbindungsstück (4) zusammenwirkt, um die Achse (1) trennbar mit dem Verbindungsstück (4) zu verbinden.

6. Haustier-Laufrad nach Anspruch 5, **dadurch gekennzeichnet, dass** die Verlängerung (8) Flügel (10) besitzt, die quer zur Längsachse der Verlängerung (8) verlaufen und einen offenen Bereich zwischen den erwähnten Flügeln (10) und dem scheibenförmigen Vorsprung (7) frei lassen, wobei der offene Bereich für die dortige exakte Aufnahme von einem Teil oder Teilen des Verbindungsstücks (4) eingerichtet ist.

7. Haustier-Laufrad nach einem der Ansprüche 1 bis 6, **dadurch gekennzeichnet, dass** das Verbindungsstück (4) mit einem Schlitz (9) versehen ist, der für die Aufnahme der Verlängerung (8) der Achse (1) oder eines Teils davon dimensioniert ist, der mit der erwähnten Verlängerung (8) der Achse (1) verbunden ist.

## Revendications

1. Roue d'exercice pour animaux de compagnie composée d'un axe (1) et d'une roue (2) comportant un trou traversant (3) destiné au montage de la roue (2) sur l'axe précité (1), sachant que l'axe (1) est monté ou peut être monté sur un raccord (4) lequel est équipé pour être placé sur un cadre d'appui, **caractérisée en ce que** l'axe (1) est creux et que le diamètre externe est plus important aux extrémités (1', 1") que dans la partie médiane (1"') de l'axe (1) située entre les extrémités en question (1', 1"), sachant que le diamètre précité des extrémités (1', 1") de l'axe (1) est sélectionné en fonction d'une valeur permettant l'ajustement précis dans le trou traversant (3) de la roue (2).

2. Roue d'exercice pour animaux de compagnie selon la revendication 1, **caractérisée en ce que** la roue (2) a la forme d'un cylindre dans lequel un animal a suffisamment de place pour courir.

3. Roue d'exercice pour animaux de compagnie selon la revendication 1 ou 2, **caractérisée en ce que** l'axe (1) est amovible et raccordable grâce au raccord (4).

4. Roue d'exercice pour animaux de compagnie selon l'une des revendications 1à 3, **caractérisée en ce que** l'axe (1) est amovible et raccordable grâce au raccord (4) par rotation autour de son axe longitudinal.

5. Roue d'exercice pour animaux de compagnie selon la revendication 3 ou 4, **caractérisée en ce que** l'axe (1) comporte un renflement en forme de disque (7) proche de l'une (1') de ses extrémités (1', 1") et est équipé d'une tige (8) du côté du renflement en forme de disque précité (7) à l'opposé de l'axe précité (1), laquelle tige (8) est conçue pour être conjuguée au raccord (4) pour le raccordement amovible de l'axe (1) avec le raccord (4).

6. Roue d'exercice pour animaux de compagnie selon la revendication 5, **caractérisée en ce que** la tige (8) comporte des ailes (10) placées perpendiculairement à l'axe longitudinal de la tige (8) et laissant un intervalle entre les ailes précitées (10) et le renflement en forme de disque (7), lequel intervalle est conçu pour recevoir précisément tout ou partie du (4).

7. Roue d'exercice pour animaux de compagnie selon l'une des revendications 1 à 6 ci-avant, **caractérisée en ce que** le raccord (4) est équipé d'une goulotte (9) dimensionnée pour recevoir la tige (8) de l'axe (1) ou la partie de celle-ci reliée à la tige précitée (8) de l'axe (1).
